# EUROPÄISCHE PATENTSCHRIFT

(11) **EP 1 798 899 B1**
(45) Veröffentlichungstag und Bekanntmachung des Hinweises auf die Patenterteilung: **14.09.2011**
(21) Anmeldenummer: 05027334.1
(22) Anmeldetag: 14.12.2005
(51) Int. Cl.: H04L 12/28, H02G 3/08, H01R 13/66, H01H 9/02

(54) **Unterputz-Verteilerdose für Niederspannungs-Stromnetze**
Embedded distribution box for low voltage network
Boîte de distribution encastrée pour réseau basse tension

(43) Veröffentlichungstag der Anmeldung: 20.06.2007
(73) Patentinhaber: Faller, Josef, 9853 Gmünd (AT)
(72) Erfinder: Faller, Josef, 9853 Gmünd (AT)
(74) Vertreter: Hehenberger, Reinhard

(56) Entgegenhaltungen:
- WO-A-00/37978
- WO-A-2004/042886
- BE-A7- 1 011 145
- DE-U1- 9 214 324
- DE-U1- 20 018 469

## Beschreibung

Die Erfindung betrifft eine Unterputz-Verteilerdose Niederspannungs-Stromnetze mit einem Dosenkörper mit Zu- bzw. Abgangsöffnungen für Niederspannungs-Stromleitungen.

Im Zuge der Elektroinstallation von Gebäuden werden zur Herstellung von Verbindungen und Abzweigungen im Niederspannungs-Stromnetz bei der Unterputz-Installation Unterputz-Verteilerdosen gesetzt. Diese Dosen werden mit Deckeln verschlossen, die einen nachträglichen, einfachen Zugang zu der Unterputz-Verteilerdose ermöglichen.

Bei der Übertragung von digitalen und analogen daten werden ebenfalls Datenleitungen unter Putz in Rohren zu Auslässen verlegt, wobei an diesen Auslässen z.B. Schnittstellen wie Steckdosen od.dgl. vorgesehen sind.

Aus der DE 296 03 218 U1 ist ein Steckdosenadapter mit Dimmerfunktion bekannt, bei dem in eine Unterputz-Dose ein Stecker mit Busanschluss und einer Infrarot-Sendediode zum Dimmen von ansteckbaren Verbrauchern mit entsprechenden Empfängern eingebaut ist.

Die EP 0 684 714 A2 und die EP 0 515 728 A2 zeigen drahtlose Kommunikationssysteme für Gebäude und Räume, wobei Sende-/Empfangseinheiten auch an Wänden und Decken angebracht sind. Dabei wird für jedes Übertragungsgerät eine eigene Leitung verlegt, die am jeweiligen Gerät endet.

Aus der DE 199 02 805 A1 ist eine Unterputz-Dose mit einem Infrarotempfänger bekannt. Auch hier handelt es sich bei der UnterputzDose um eine Dose für ein Endgerät, das in dieser Unterputz-Dose eingebaut ist.

Aus der DE 43 41 099 A1 ist eine Unterputz-Verteilerdose bekannt, in welche elektronische Geräte eingebaut werden. In diese VerteilerDosen und von diesen weg führen ausschließlich Busleitungen.

Aus der WO 2004/042886 A ist eine Unterputz-Verteilerdose bekannt, in welche elektronische Geräte eingebaut sind, die an Bus-Leitungen angeschlossen sind.

Die DE 200 18 469 U zeigt ein Unterputzinstallationssystem, bei dem unter anderem Schalter und/oder Steckdosen an einem Tragrahmen angeordnet sein können. Außerdem sind Kommunikationsgeräte mit Busankopplungen in der Unterputz-Installationsdose angeordnet.

Der Erfindung liegt die Aufgabe zu Grunde, das Verlegen der Datenleitungen bzw. Anordnen der Auslässe zu vereinfachen.

Gelöst wird diese Aufgabe mit einer Unterputz-Verteilerdose für Niederspannungs-Stromnetze mit den Merkmalen des Anspruches 1.

Als aktive Geräte werden beispielhaft Infrarot-Sende- und - Empfangseinheiten, Kameras oder Sensoren, Daten-Repeater und/oder -Konverter, Funk-Sende- und -Empfangseinheiten und Kombinationen derartiger Geräte erwähnt.

Die Erfindung macht sich die Eigenschaft von nicht galvanischen Leitern, wie Kunststoff-Lichtwellenleitern (Plastic Optical Fiber, POF), Glasfasern (Glaslichtwellenleiter, GOF) und Mischformen (z.B. Hardpolymercladfiber, HPCF) zu Nutze, dass diese gemeinsam mit bzw. sehr nahe an Niederspannungs-Stromnetzen verlegt werden können, da die Datenübertragung in den erwähnten Leitern durch das Niederspannungs-Stromnetz nicht gestört wird. Da im Zuge der Installation des Niederspannungs-Stromnetzes ohnedies Unterputz-Verteilerdosen gesetzt werden, wird erfindungsgemäß vorgeschlagen, die Unterputz-Verteilerdosen heranzuziehen, um die erwähnten Geräte an bzw. in diesen anzuordnen, was den Vorteil mit sich bringt, dass eigene Auslässe, Schnittstellen bzw. Steckdosen für die Datenleitungen nicht mehr erforderlich sind.

Ein weiterer Vorteil, der sich bei der Erfindung ergibt ist jener, dass die Stromversorgung des Gerätes durch die in der Unterputz-Verteilerdose ohnedies angeordneten Stromleitungen sehr einfach möglich ist.

Es versteht sich, dass die Erfindung nicht auf die oben erwähnten, nicht galvanischen Datenleitungen beschränkt ist, sondern dass die Datenleitungen auch galvanischer Natur sein können, soferne auf eine ausreichende Abschirmung der Datenleitungen vor Störungen durch das Niederspannungs-stromnetz geachtet wird.

Im Rahmen der Erfindung kann die Unterputz-Verteilerdose einen Deckel aufweisen, auf dessen Außenseite das Gerät angeordnet ist. Diese Ausführungsform ist dann vorteilhaft, wenn im Inneren der Unterputz-Verteilerdose nicht ausreichend Raum für das Gerät vorhanden ist. Falls der Raum innerhalb der Unterputz-Verteilerdose jedoch so groß bemessen ist, dass das Gerät darin angeordnet werden kann, ist es u.a. aus optischen Gründen vorteilhaft, wenn das Gerät innerhalb der Unterputz-Verteilerdose angeordnet ist. Wenn es sich beim Gerät um ein solches handelt, das eine direkte Sichtverbindung zu einer anderen Einheit benötigt, mit der es kommunizieren soll, wird bei einer Anordnung des Gerätes innerhalb der Unterputz-Verteilerdose im Deckel ein Fenster für die Datenkommunikation vorgesehen sein müssen.

Weitere vorteilhafte Ausführungsformen sind Gegenstand der übrigen Unteransprüche.

Nachfolgend werden bevorzugte Ausführungsformen der Erfindung unter Bezugnahme auf die beiliegenden Zeichnungen näher beschrieben. Es zeigt:
Fig. 1 eine Vorderansicht einer Unterputz-Verteilerdose für ein Niederspannungs-Stromnetz mit abgenommenem Deckel;
Fig. 2 einen Schnitt durch die Unterputz-Verteilerdose von Fig. 1 mit einem abgehobenen Deckel;
Fig. 3 einen Deckel mit einer Kombination daran befestigter aktiver Geräte;
Fig. 4 die Rückansicht des Deckels von Fig. 3;
Fig. 5 einen Schnitt durch eine Unterputz-Verteilerdose mit einem Deckel mit daran angeordneten aktiven Geräten entsprechend Fig. 3 und 4;
Fig. 6 eine Vorderansicht der Anordnung von Fig. 5;
Fig. 7 die Anordnung von Fig. 5 in einer Explosionsansicht;
Fig. 8 bis 12 verschiedene Ausführungsformen von Deckeln mit daran angeordneten aktiven Geräten;
Fig. 13 bis 16 verschiedene Ausführungsformen von Deckeln mit Ausschnitten zur Befestigung von aktiven Geräten;
Fig. 17 einen Schnitt durch eine Unterputz-Verteilerdose mit einem Deckel, an dessen Innenseite aktive Geräte angeordnet sind;
Fig. 18 einen Außenansicht eines Deckels mit einer Öffnung für interaktive Geräte;
Fig. 19 einen Schnitt durch eine Unterputz-Verteilerdose mit integrierten Montagerahmen und Anschlussklemmen;
Fig. 20 eine Vorderansicht der Unterputz-Verteilerdose von Fig. 19;
Fig. 21 in schematischer Darstellung eine Explosionszeichnung der Unterputz-Verteilerdose mit integriertem Montagerahmen und Anschlussklemmen, mit einem aktiven Datenmodul mit integrierter Spannungsversorgung für aktive Geräte, einem Deckel und einem aktiven Dateninterface;
Fig. 22 eine Vorderansicht auf einen Deckel für Unterputzverteilerdosen mit integrierter Versorgungseinheit für Datenrepeater oder aktive Dateninterfaces;
Fig. 23 einen Deckel für eine Unterputzverteilerdose, ein Basismodul mit integrierter Stromversorgung und ein interaktives Gerät; und
Fig. 24 eine Unterputzdose mit einem Montagerahmen und einer drehbar gelagerten Klemm- und Anschlussvorrichtung.

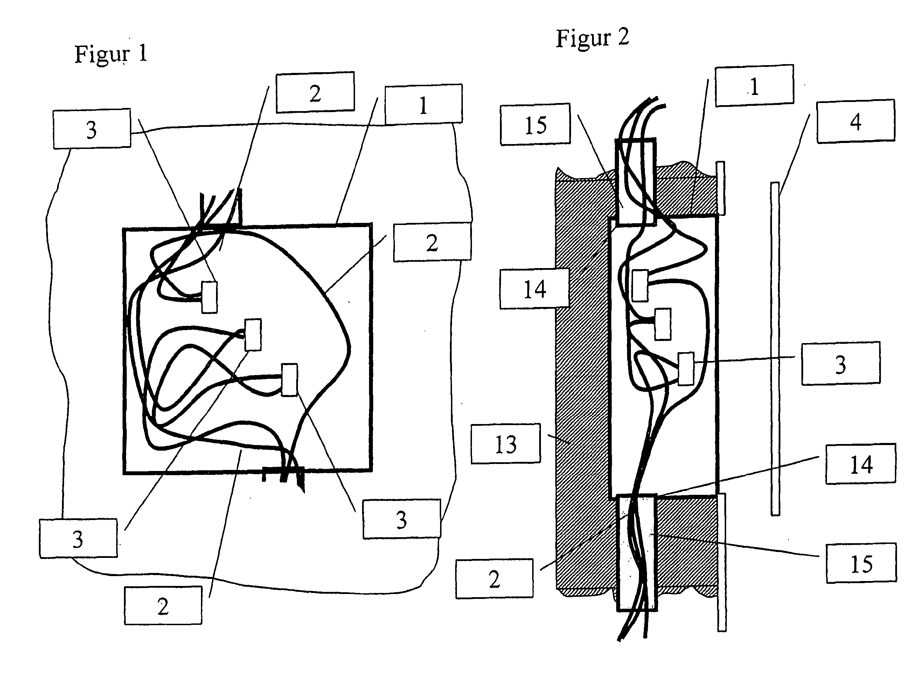

In den Fig. 1 und 2 ist eine an sich übliche Unterputz-Verteilerdose dargestellt, die einen in einer Mauer 13 aufgenommenen Dosenkörper 1 aufweist, der mittels eines Deckels 4 verschlossen werden kann. Der Dosenkörper 1 weist Zu- bzw. Abgangsöffnungen 14 auf, in welche die Enden von Unterputz-Rohren 15 gesteckt sind. Durch diese Rohre 15 werden die Leitungen 2 eines Niederspannungs-Stromnetzes in den Dosenkörper 1 der Unterputz-Verteilerdose geführt und über Klemmen 3 miteinander verbunden. Soweit entspricht die Unterputz-Verteilerdose dem Stand der Technik.

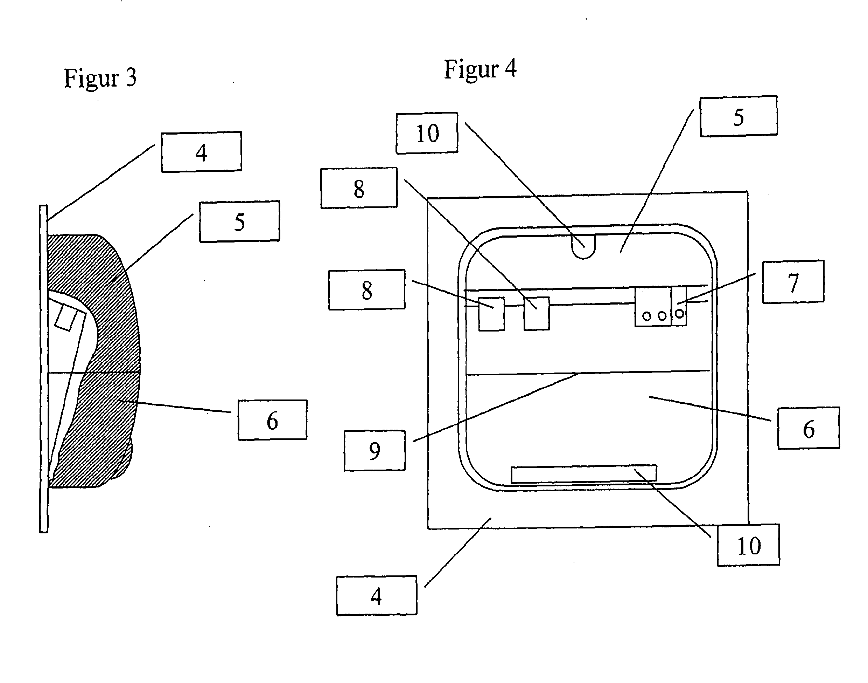

Erfindungsgemäß wird die Unterputz-Verteilerdose allerdings auch dazu verwendet, am Deckel 4 aktive Geräte 5, 6, z.B. ein Daten-Repeater-Modul 5 und ein integriertes Kommunikations-Modul 6, z.B. eine Funksende- und -Empfangseinheit oder ein Infrarot-Modul, anzuordnen. Die Anordnung dieser Module 5, 6 kann entweder innerhalb des Dosenkörpers 1 erfolgen, wenn darin ausreichend Platz vorhanden ist oder, wie dies beispielhaft in den Fig. 3 bis 7 dargestellt ist, am Deckel 4 befestigt außerhalb des Dosenkörpers 1.

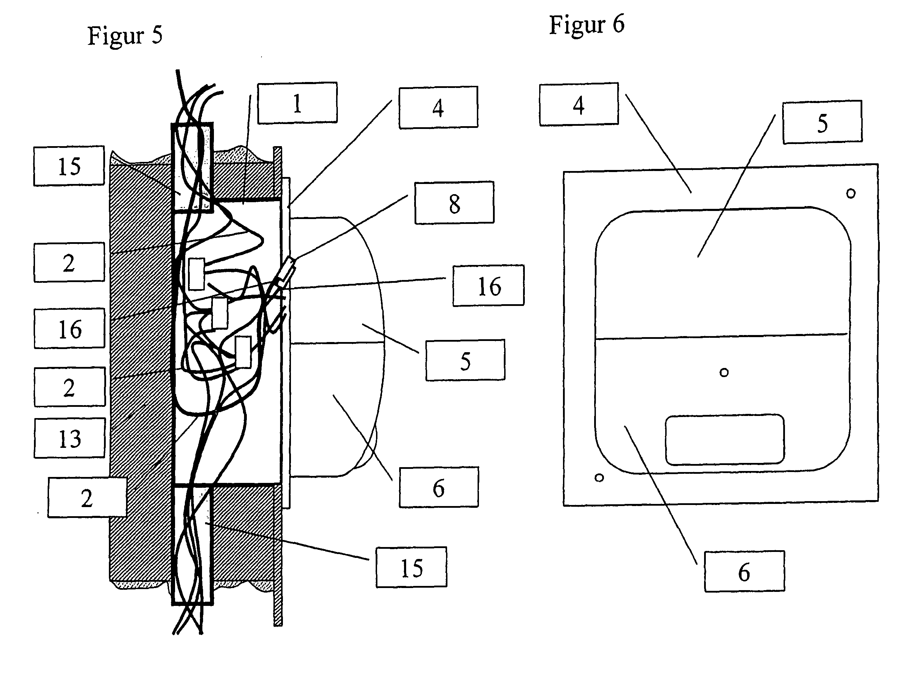

In der in den Fig. 3 bis 7 dargestellten Ausführungsform ist am Deckel 4 wie bereits erwähnt eine Kombination aus einem Daten-Repeater-Modul 5 und einem Kommunikations-Modul 6 angeordnet, die über eine symbolisch dargestellte Schnittstelle 9 miteinander verbunden sind. Die Anschlüsse an das Niederspannungs-Stromnetz sind in Fig. 4 mit 7 bezeichnet und Anschlüsse für vorzugsweise optische Datenleitungen 16, die von der dem Dosenkörper 1 zugewandten Hinterseite des Deckels 4 an das Daten-Repeater-Modul 5 herangeführt werden (Fig. 5), sind mit 8 bezeichnet. Wie insbesondere Fig. 5 zeigt, sind die Datenleitungen 16 ebenfalls in den Unterputz-Rohren 15 gemeinsam mit den Netzleitungen 2 verlegt, können aber natürlich auch in eigenen Rohren verlegt und in die Unterputz-Verteilerdose eingeleitet sein.

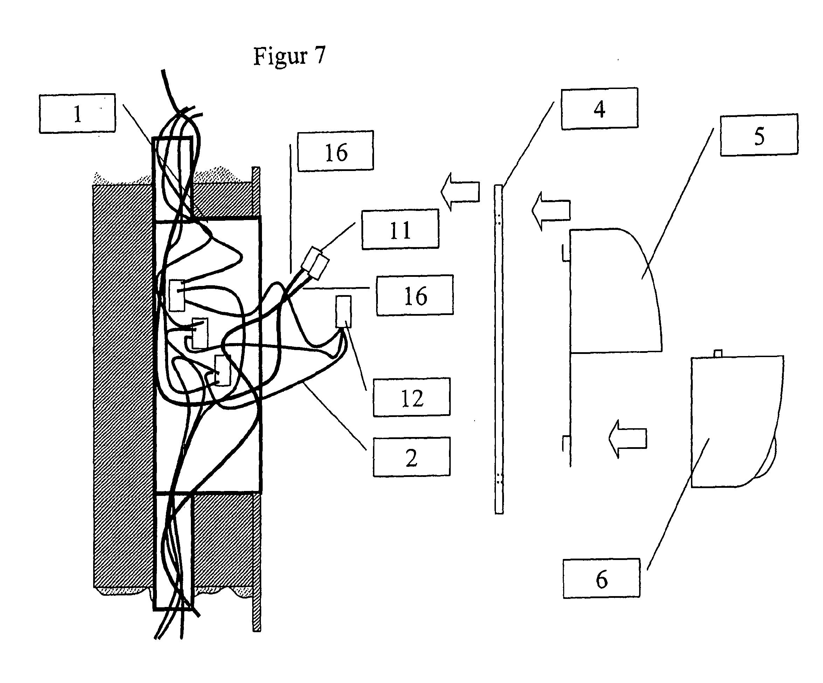

In der Explosionsdarstellung von Fig. 7 sind die optischen Stecker 11 der Datenleitungen 16 zu sehen, die in die entsprechenden Anschlüsse 8 am Daten-Repeater-Modul 5 eingesteckt werden können. Der Stecker für den Stromnetzanschluß Daten-Repeater-Moduls 5 ist mit 12 bezeichnet.

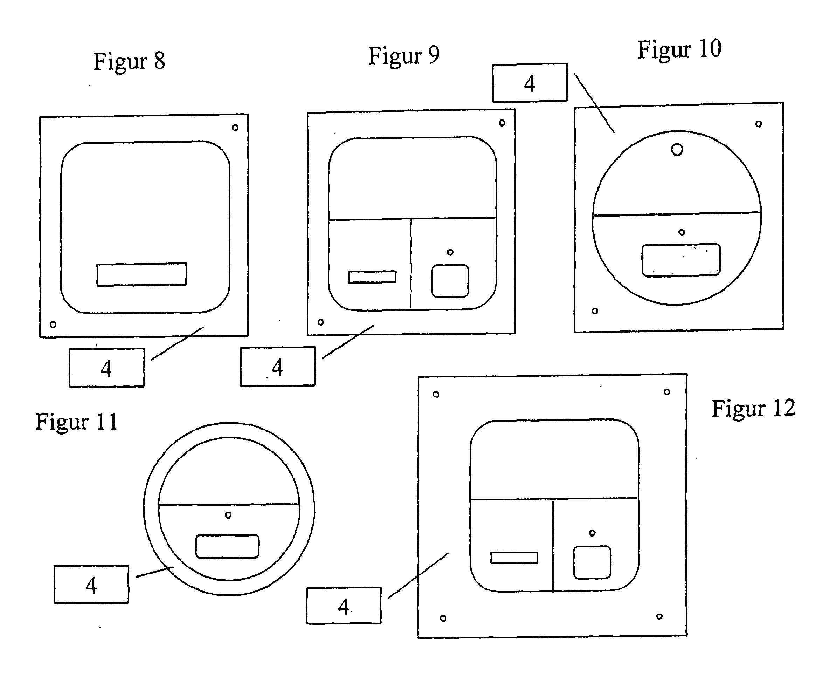

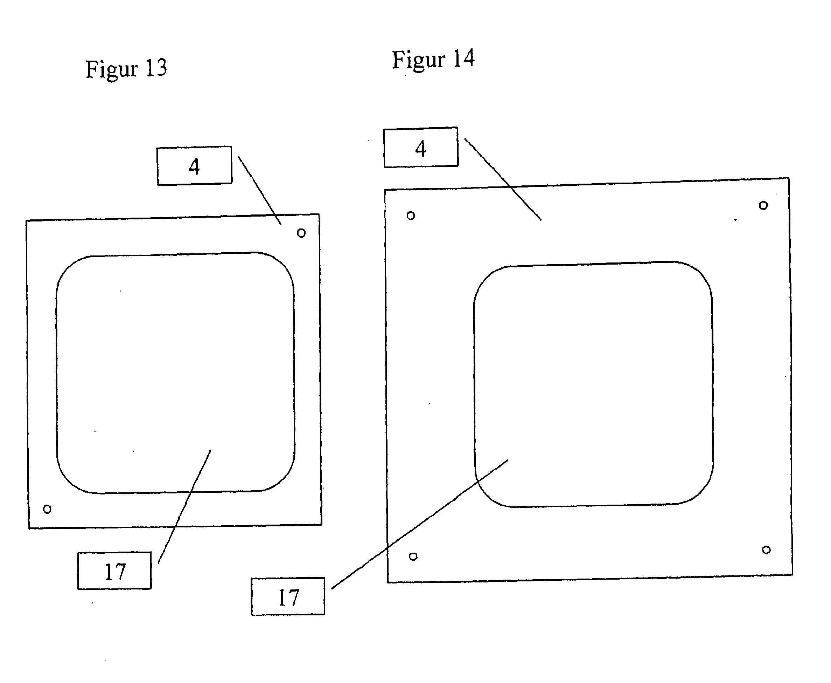

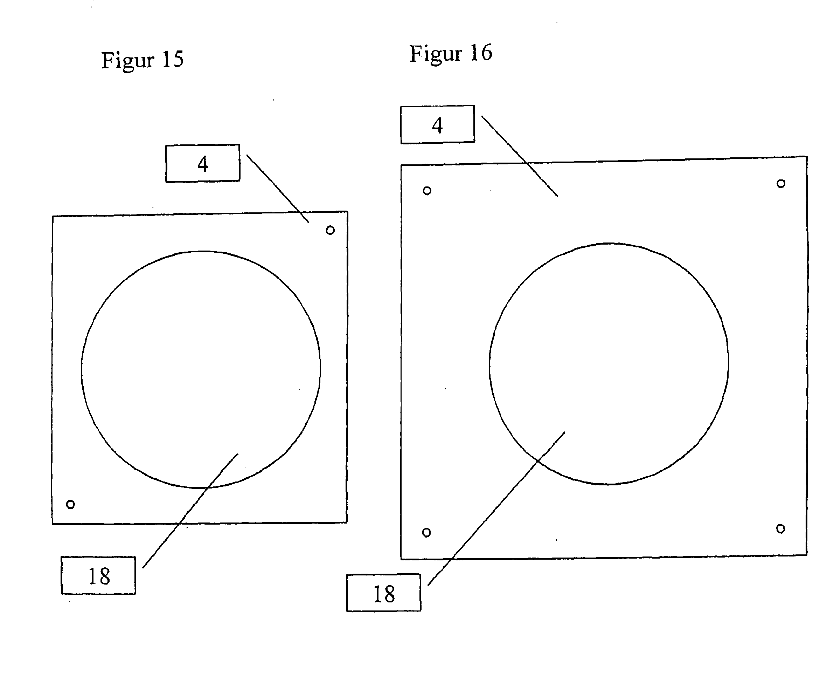

Die Fig. 8 bis 12 zeigen beispielhafte Ausführungsvarianten von Deckeln 4 mit daran angeordneten aktiven Geräten bzw. Kombinationen davon. Beispielhaft sind in den Fig. 13 bis 16 auch verschiedene Größen von Deckeln 4 für verschiedene Größen von Dosenkörpern 1 von Unterputz-Verteilerdosen dargestellt, wobei ersichtlich ist, dass zwar unterschiedliche Ausschnittformen, z.B. viereckige Ausschnitte 17 in den Fig. 13 und 14 und runde Ausschnitte 18 in den Fig. 15 und 16, möglich sind, die Größe der jeweils gewählten Ausschnittsform aber unabhängig von der Größe der Deckel 4 immer standardisiert ist, so dass standardisierte aktive Geräte an weitgehend beliebig großen Unterputz-Verteilerdosen angeordnet werden können.

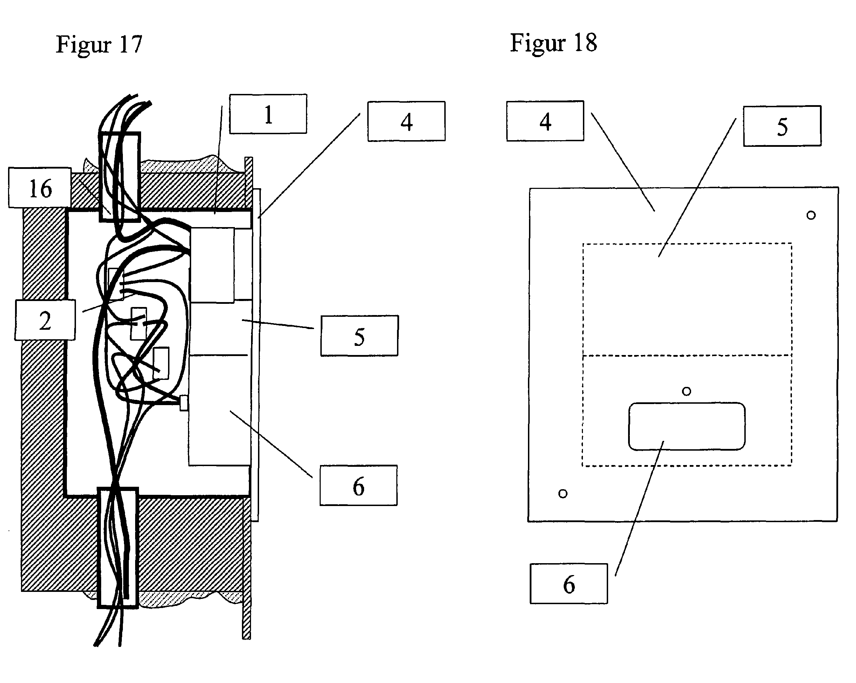

In Fig. 17 ist eine Unterputzdose 1 mit einem Deckel 4 und einer in die Unterputzdose hineinragenden Kombination aus Datenrepeatermodul 5 und Kommunikationsmodul 6 dargestellt. Die Datenleitungen 16 sind ebenfalls gemeinsam mit der Netzleitung 2 verlegt und in der Dose 1 geklemmt.

In Fig. 18 ist der Deckel 4 mit einem durch eine Öffnung im Deckel 4 nach außen sichtbaren aber strichliert dargestellten Datenrepeatermodul 5 dargestellt.

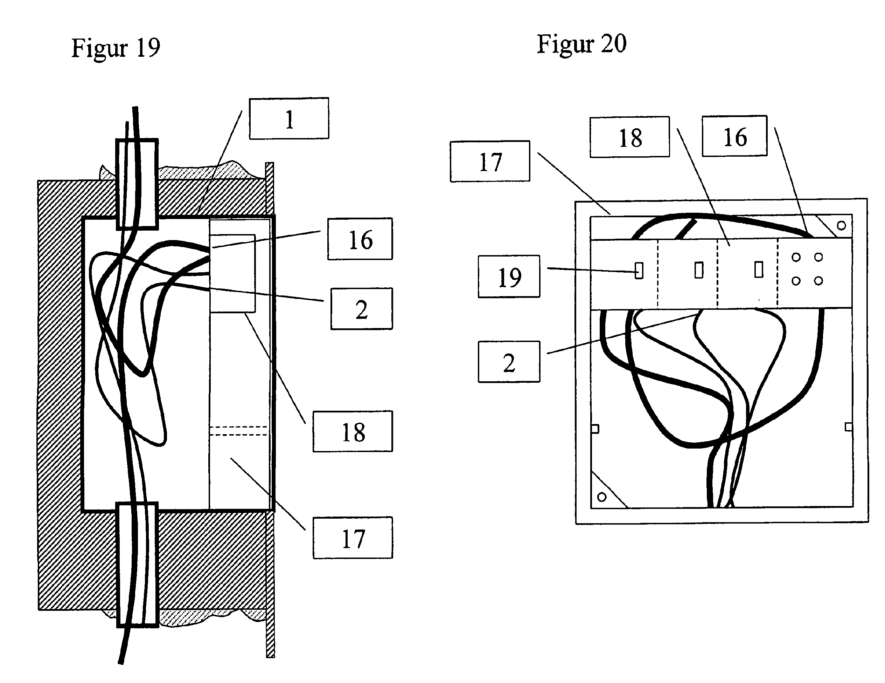

Um eine einfachere und übersichtlicherer Anschlussmöglichkeit der Datenleitungen 16 und Netzleitungen 2 zu schaffen, ist in Fig. 19 eine Unterputzdose 1 mit einem integrierten oder in der Nachrüstung einsetzbaren Montagerahmen 17 dargestellt. Der Montagerahmen 17 enthält eine Klemm- und Anschlussvorrichtung 18. An dieser können je Phase der Niederspannungsleitungen 2 mehrerer Anschlussklemmen vorgesehen sein, die miteinander galvanisch verbunden sind. Des Weiteren können die Datenleitungen 16 für den Datenrepeater 5 und Kommunikationsmodule daran befestigt werden. Optische Datenanschlüsse können direkt geklemmt, über Ferullen oder Steckverbindungen ausgeführt sein.

In Fig.20 ist in der Vorderansicht der Montagerahmen 17 und die kombinierte Klemm- und Anschlussvorrichtung 18 für die Niederspannungsleitungen 2 und die Datenleitungen 16 dargestellt. Die Klemmvorrichtung 18 hat auch Steckanschlüsse 19 für einen Datenrepeater 5 mit integrierter Stromversorgung und/oder Kommunikationsmodule.

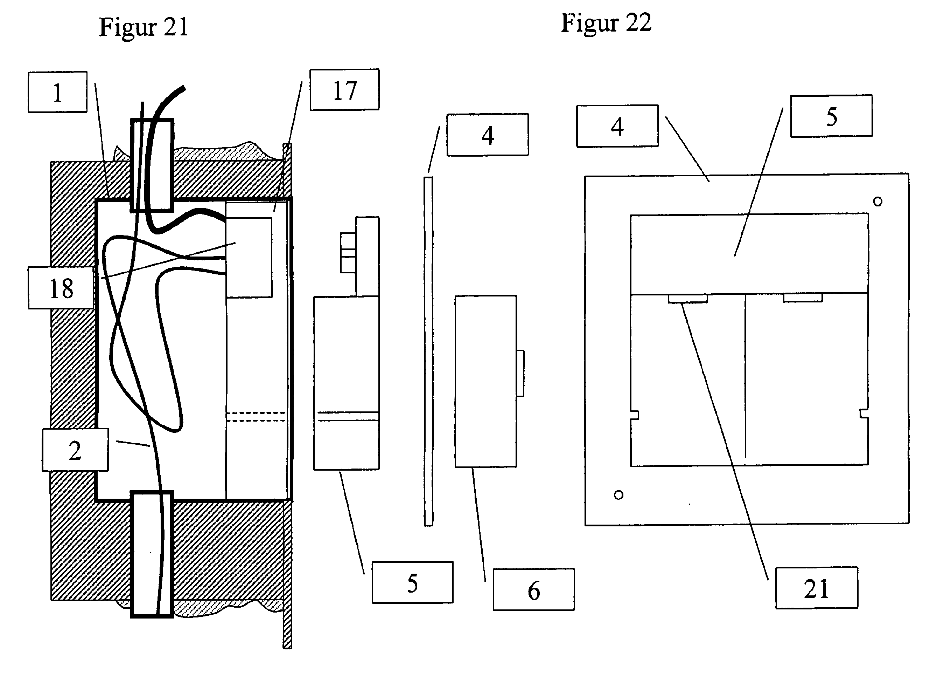

Fig. 21 zeigt in einer Explosionszeichnung noch einmal einen Schnitt durch die Unterputzdose 1 mit einem Montagerahmen 17 und eine kombinierte Klemm- und Anschlussvorrichtung 18 sowie ein Datenbasismodul oder einen Datenrepeater 5, ein Deckel 4 sowie ein aktives Kommunikationsmodul 6.

In Fig. 22 ist in der Vorderansicht der Deckel 4 mit dem montierten Datenrepeater 5 gezeigt. Sichtbar auch Anschlüsse 21 und Raum für ein Kommunikationsmodul.

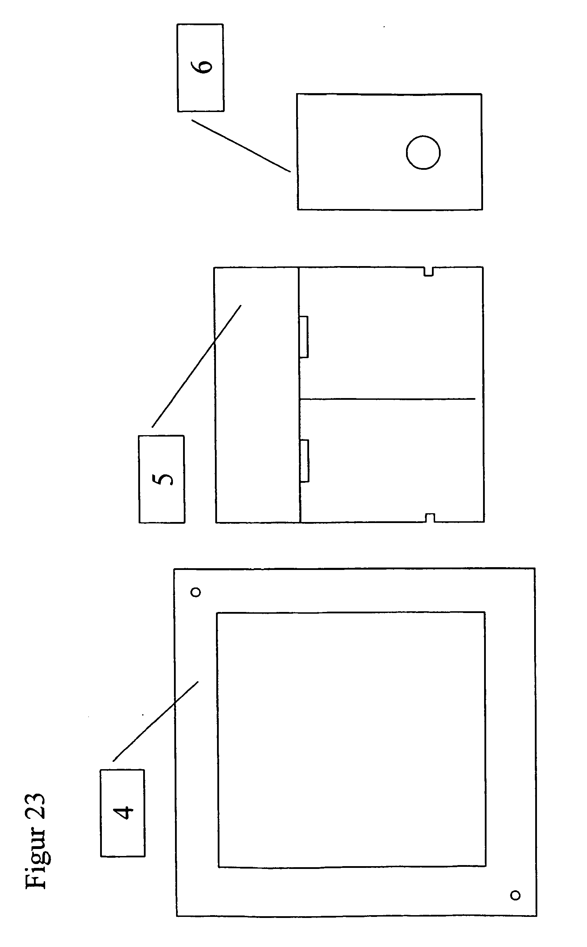

Fig. 23 zeigt noch einmal schematisch einen Deckel 4 und davon abgenommen ein Datenbasismodul 5 und ein Kommunikationsmodul 6.

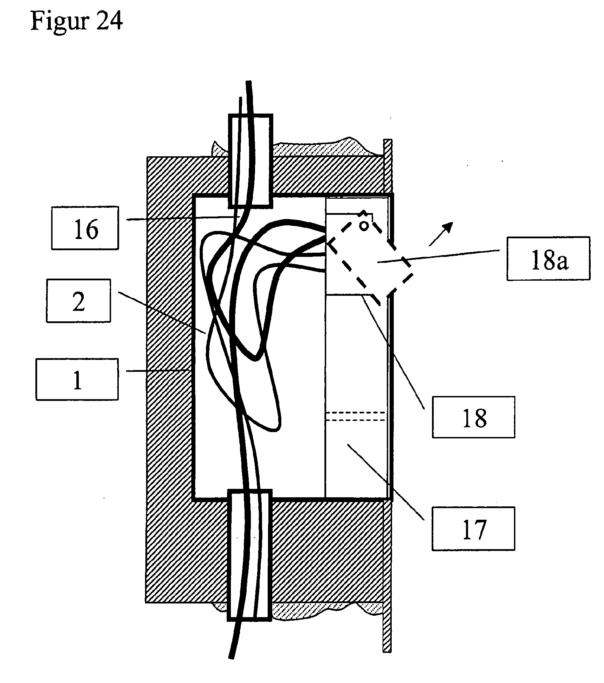

Fig. 24 zeigt einen Schnitt durch eine Unterputzdose 1 mit einem Montagerahmen 17 und eine kombinierte Klemm- und Anschlussvorrichtung 18, die drehbar gelagert und schwenkbar ausgeführt ist (18a). Dadurch wird der Zugang zu den Anschlüssen erleichtert und eine Öffnung der Verteilerdose bei angeschlossenem Datenmodul ermöglicht.

Um die Befestigung der Deckel 4 an den Dosenkörpern 1 zu vereinfachen und insbesondere das Anschließen der Netzleitungen 2 und der Datenleitungen 16 an die jeweiligen aktiven Geräte bzw. Module einfacher durchführen zu können, kann im Rahmen der Erfindung vorgesehen sein, dass die Deckel 4 z.B. gelenkig auf Montagerahmen befestigt sind, die ihrerseits mit den Dosenkörpern 1, z.B. gesteckt oder geschraubt, verbunden sind. Die Montage der einzelnen aktiven Geräte und das Anschließen dieser an die Leitungen kann dann sehr einfach erfolgen, da der Deckel nur aufgeklappt werden muß und dann von beiden Seiten gut zugänglich ist.

Da die Unterputz-Verteilerdosen von Niederspannungs-Stromnetzen meistens im oberen Viertel der Raumhöhe angeordnet sind, ist für die Abstrahlung von Infrarot- oder Funksignalen auch eine optimale Raumsituation gegeben.

Falls im Inneren des Dosenkörpers 1 ausreichend Platz ist, können die aktiven Geräte auch an der Innenseite der Deckel 4 angeordnet sein, wobei z.B. bei Infrarotsende- und -empfangsmodulen, Kameras oderen anderen Sensoren, die eine direkte Sichtverbindung zur Kommunikation benötigen, entsprechende Fenster oder Durchbrüche in den Deckeln 4 vorhanden sein müssen. Bei entsprechender Gestaltung der Dosenkörper 1 ist es auch möglich, die einzelnen aktiven Geräte innerhalb des Dosenkörpers 1 anzuordnen bzw. zu befestigen, ohne dass eine direkte Befestigung mit einem Deckel 4 hergestellt wird.

## Patentansprüche

1. Unterputz-Verteilerdose für Niederspannungs-Stromnetze mit einem Dosenkörper (1) mit Zu- bzw. Abgangsöffnungen (14) für Niederspannungs-Stromleitungen (2) und mit einem Deckel (4), **dadurch gekennzeichnet, dass** die Unterputz-Verteilerdose ein aktives Gerät (5, 6) zum Senden und/oder Empfangen von Daten in einen bzw. aus einem Raum aufweist, dass das aktive Gerät (5, 6) durch den Dosenkörper (1) hindurch mit Leitern (16) zur Datenübertragung verbunden ist und dass das aktive Gerät (5, 6) am Deckel (4) der Unberputz-Verteilerdose angeordnet ist.

2. Unterputz-Verteilerdose nach Anspruch 1, **dadurch gekennzeichnet, dass** das aktive Gerät (5, 6) einen Anschluss (7) an die Stromleitungen (2) aufweist.

3. Unterputz-Verteilerdose nach Anspruch 1 oder 2, **dadurch gekennzeichnet, dass** das aktive Gerät (5, 6) eine Infrarot-Sende- und -Empfangseinheit ist.

4. Unterputz-Verteilerdose nach Anspruch 1 oder 2, **dadurch gekennzeichnet, dass** das aktive Gerät (5, 6) eine Kamera oder ein Sensor ist.

5. Unterputz-Verteilerdose nach Anspruch 1 oder 2, **dadurch gekennzeichnet, dass** das aktive Gerät (5, 6) ein Daten-Repeater und/oder -Konverter ist.

6. Unterputz-Verteilerdose nach Anspruch 1 oder 2, **dadurch gekennzeichnet, dass** das aktive Gerät (5, 6) eine Funk-Sende- und -Empfangseinheit ist.

7. Unterputz-Verteilerdose nach einem der Ansprüche 1 bis 6, **dadurch gekennzeichnet, dass** sie zwei oder mehrere aktive Geräte (5, 6) nach einem der Ansprüchen 4 bis 7 aufweist.

8. Unterputz-Verteilerdose nach einem der Ansprüche 1 bis 7, **dadurch gekennzeichnet, dass** das aktive Gerät (5, 6) auf der Außenseite des Deckels (4) angeordnet ist.

9. Unterputz-Verteilerdose nach einem der Ansprüche 1 bis 7, **dadurch gekennzeichnet, dass** das aktive Gerät (5, 6) innerhalb des Dosenkörpers (1) aufgenommen ist.

10. Unterputz-Verteilerdose nach einem der Ansprüche 1 bis 9, **dadurch gekennzeichnet, dass** die Leiter (16) zur Datenübertragung nicht galvanische Leiter sind.

11. Unterputz-Verteilerdose nach einem der Ansprüche 1 bis 10, **dadurch gekennzeichnet, dass** am Dosenkörper (1) ein Montagerahmen (17) angeordnet ist, an dem der Deckel befestigt werden kann.

12. Unterputz-Verteilerdose nach einem der Ansprüche 1 bis 11, **dadurch gekennzeichnet, dass** der Deckel (4) schwenkbar am Dosenkörper (1), vorzugsweise am Montagerahmen (17), gelagert ist.

13. Unterputz-Verteilerdose nach einem der Ansprüche 1 bis 12, **dadurch gekennzeichnet, dass** am Dosenkörper (1) oder am Montagerahmen (17) eine Klemm- und Anschlussvorrichtung (18) befestigt ist, die je Phase der Niederspannungs-Stromleitungen (2) wenigstens zwei Anschlussklemmen aufweist, die miteinander galvanisch verbunden sind.

14. Unterpütz-Verteilerdose nach Anspruch 12 oder 13, **dadurch gekennzeichnet, dass** die Datenleitungen (16) an der Klemm- und Anschlussvorrichtung (18) angesteckt oder angeklemmt werden können.

## Claims

1. An in-wall junction box for low-voltage mains networks comprising a box body (1) with input and/or output openings (14) for low-voltage power lines (2) and with a lid (4), **characterised in that** the in-wall junction box comprises an active device (5, 6) for sending and/or receiving data into and from a room respectively, **in that** the active device (5, 6) is connected, through the box body (1), with conductors (16) for data transmission and **in that** the active device (5, 6) is arranged on the lid (4) of the in-wall junction box.

2. In-wall junction box according to claim 1, **characterised in that** the active device (5, 6) comprises a connection (7) for the power lines (2).

3. In-wall junction box according to claim 1 or 2, **characterised in that** the active device (5, 6) is an infrared transmitting and receiving unit.

4. In-wall junction box according to claim 1 or 2, **characterised in that** the active device (5, 6) is a camera or a sensor.

5. In-wall junction box according to claim 1 or 2, **characterised in that** the active device (5, 6) is a data repeater and/or data converter.

6. In-wall junction box according to claim 1 or 2, **characterised in that** the active device (5, 6) is a radio transmitting and receiving unit.

7. In-wall junction box according to one of claims 1 to 6, **characterised in that** it comprises one or several active devices (5, 6) according to one of claims 4 to 7.

8. In-wall junction box according to one of claims 1 to 7, **characterised in that** the active device (5, 6) is arranged on the outside of the lid (4).

9. In-wall junction box according to one of claims 1 to 7, **characterised in that** the active device (5, 6) is housed inside the box body (1).

10. In-wall junction box according to one of claims 1 to 9, **characterised in that** the conductors (16) for data transmission or non-galvanic conductors.

11. In-wall junction box according to one of claims 1 to 10, **characterised in that** a mounting frame (17) is arranged on the box body (1), to which the lid can be fastened.

12. In-wall junction box according to one of claims 1 to 11, **characterised in that** the lid (4) is pivotably mounted on the box body (1), preferably on the mounting frame (17).

13. In-wall junction box according to one of claims 1 to 12, **characterised in that** a clamping and connecting device (18) is fastened on the box body (1) or on the mounting frame (17), which comprises at least two galvanically connected terminals for each phase of the low-voltage power lines (2).

14. In-wall junction box according to claim 12 or 13, **characterised in that** the data lines (16) can be plugged into or clamped to the clamping and connecting device (18).

## Revendications

1. Boîte de distribution sous crépi pour des réseaux électriques à basse tension comprenant un corps de boîte (1) avec des ouvertures d'arrivée et de sortie (14) pour des lignes électriques à basse tension (2) et un couvercle (4), **caractérisée en ce que** la boîte de distribution sous crépi présente un appareil (5, 6) actif pour l'émission et/ou la réception de données dans un espace ou à partir d'un espace, **en ce que** l'appareil (5, 6) actif est relié par le corps de boîte (1) à des conducteurs (16) pour la transmission de données et **en ce que** l'appareil (5, 6) actif est disposé au couvercle (4) de la boîte de distribution sous crépi.

2. Boîte de distribution sous crépi selon la revendication 1, **caractérisée en ce que** l'appareil (5, 6) actif présente un raccordement (7) aux lignes électriques (2).

3. Boîte de distribution sous crépi selon la revendication 1 ou 2, **caractérisée en ce que** l'appareil (5, 6) actif est une unité d'émission et de réception infrarouge.

4. Boîte de distribution sous crépi selon la revendication 1 ou 2, **caractérisée en ce que** l'appareil (5, 6) actif est une caméra ou un capteur.

5. Boîte de distribution sous crépi selon la revendication 1 ou 2, **caractérisée en ce que** l'appareil (5, 6) actif est un répéteur de données et/ou un convertisseur de données.

6. Boîte de distribution sous crépi selon la revendication 1 ou 2, **caractérisée en ce que** l'appareil (5, 6) actif est une unité d'émission et de réception radio.

7. Boîte de distribution sous crépi selon l'une quelconque des revendications 1 à 6, **caractérisée en ce qu'**elle présente deux ou plusieurs appareils (5, 6) actifs selon l'une quelconque des revendications 4 à 7.

8. Boîte de distribution sous crépi selon l'une quelconque des revendications 1 à 7, **caractérisée en ce que** l'appareil (5, 6) actif est disposé sur le côté extérieur du couvercle (4).

9. Boîte de distribution sous crépi selon l'une quelconque des revendications 1 à 7, **caractérisée en ce que** l'appareil (5, 6) actif est réceptionné à l'intérieur du corps de boîte (1).

10. Boîte de distribution sous crépi selon l'une quelconque des revendications 1 à 9, **caractérisée en ce que** les conducteurs (16) pour la transmission de données ne sont pas des conducteurs galvaniques.

11. Boîte de distribution sous crépi selon l'une quelconque des revendications 1 à 10, **caractérisée en ce qu'**un cadre de montage (17), sur lequel le couvercle peut être fixé, est disposé sur le corps de boîte (1).

12. Boîte de distribution sous crépi selon l'une quelconque des revendications 1 à 11, **caractérisée en ce que** le couvercle (4) est monté de façon pivotante sur le corps de boîte (1), de préférence sur le cadre de montage (17).

13. Boîte de distribution sous crépi selon l'une quelconque des revendications 1 à 12, **caractérisée en ce que** sur le corps de boîte (1) ou sur le cadre de montage (17) est fixé un dispositif de serrage et de raccordement (18), qui présente par phase des lignes électriques basse tension (2) au moins deux bornes de raccordement qui sont reliées l'une à l'autre de façon galvanique.

14. Boîte de distribution sous crépi selon la revendication 12 ou 13, **caractérisée en ce que** les lignes de données (16) peuvent être attachées ou serrées sur le dispositif de serrage et de raccordement (18).
